# EUROPEAN PATENT SPECIFICATION

(11) **EP 2 188 555 B1**
(45) Date of publication and mention of the grant of the patent: **25.12.2013**
(21) Application number: 08798902.6
(22) Date of filing: 28.08.2008
(51) Int. Cl.: F16K 31/126, F16K 1/36, F16K 25/04, F16K 25/00

(54) **METAL SEALING DISK HAVING AN ELASTOMERIC BACKING FOR USE WITH FLUID REGULATORS**
METALLISCHE DICHTUNGSSCHEIBE MIT EINER ELASTOMERISCHEN VERSTÄRKUNG FÜR FLÜSSIGKEITSREGELRN
DISQUE D'ETANCHEITE METALLIQUE A SUPPORT ELASTOMERE DESTINE A DES REGULATEURS DE FLUIDE

(30) Priority: 11.09.2007 US 853452
(43) Date of publication of application: 26.05.2010
(73) Proprietor: Fisher Controls International LLC, St. Louis, MO 63136 (US)
(72) Inventor: DAVIS, David, B., Whitewright, TX 75491 (US)
(74) Representative: Bohnenberger, Johannes
(86) International application number: PCT/US2008/074679
(87) International publication number: WO 2009/035864

(56) References cited:
- EP-A- 0 919 897
- EP-A- 0 919 898
- EP-A- 1 150 194
- WO-A-2006/100603
- GB-A- 377 608
- GB-A- 941 421
- GB-A- 2 136 540
- US-A- 2 255 404
- US-A- 3 211 418
- US-A- 4 659 060

## Description

### FIELD OF THE DISCLOSURE

The present disclosure relates generally to fluid regulators and more particularly, a metal sealing disk having an elastomeric backing for use with fluid regulators.

### BACKGROUND

Fluid valves and regulators are commonly distributed throughout process control systems to control the flow rates and/or pressures of various fluids (e.g., liquids, gasses, etc.). In particular, a fluid regulator is typically used to reduce the pressure of a fluid and regulate the pressure to a substantially constant value. Specifically, a fluid regulator has an inlet that typically receives a supply fluid at a relatively high pressure and provides a relatively lower pressure at an outlet. Inlet pressure is reduced to a lower outlet pressure by restricting flow through an orifice to match the fluctuating downstream demand. For example, a gas regulator associated with a piece of equipment (e.g., a boiler) may receive a gas having a relatively high and somewhat variable pressure from a gas distribution source and may regulate the gas to have a lower, substantially constant pressure suitable for safe, efficient use by the equipment.

Fluid regulators typically control the flow and pressure of a fluid using a diaphragm having a set or control pressure force applied to its upper and lower surfaces or sides. The diaphragm moves a flow control member or throttling member (e.g., a valve sealing disk) in response to a difference between the outlet pressure and the set or control pressure to vary the flow restriction provided by the flow control member or throttling member to achieve a substantially constant lower outlet pressure. The diaphragm can be coupled directly or via a linkage (e.g., a lever) to the sealing disk to cause the sealing disk to engage a valve seat (e.g., a seat ring) anchored around an orifice of the regulator that fluidly couples the inlet of the regulator to its outlet.

A valve sealing disk typically includes an elastomeric sealing disk that provides a sealing surface to sealingly engage a valve seat to restrict fluid flow through an orifice (i.e., a closed position). A sealing disk is typically made of an elastomeric material that provides characteristics such as flexibility, resilience, etc., to facilitate sealing against the valve seat, even if the sealing disk and/or valve seat engagement surfaces are misaligned and/or worn.

However, elastomeric sealing disks can be prone to wear and can experience rapid erosion and damage when used in severe service conditions (e.g., fluids having a relatively high velocity, a relatively high temperature, and/or which chemically react with the elastomeric material) and, thus, are limited in application. When erosion occurs, the elastomeric sealing disk can break off into small pieces that contaminate the fluid (i.e., chunking may occur). Furthermore, the resulting wear on the elastomeric sealing disk can prevent a regulator from properly sealing against a valve seat and necessitate the shut down or bypass of a process system to replace the disk.

Some known valves use a sealing disk made of metal (e.g., steel). A metal sealing disk can withstand the example severe service conditions discussed above. Such metal sealing disks are robust and provide a durable surface that is highly resistant to chunking and damage caused by particulate matter in a fluid stream. However, a metal sealing disk may fail to provide an adequate, reliable seal when engaged with a valve seat to restrict fluid flow through the orifice due to perpendicularity issues. Thus, metal sealing disks are often limited to use in applications where a reliable seal is not essential. Perpendicularity issues can arise from a misalignment between a metal sealing disk and a metal valve seat (e.g., a metal seat ring) and, thus, may cause an undesired leakage. Variations in the structure or dimensions of the components arising from, for example, an imprecise manufacturing process and/or installation of the valve sealing disk may cause such misalignment.

A sealing disk apparatus of this type is known from the document US 2255404.

### SUMMARY

The above mentioned problems are solved by a sealing disk apparatus according to claim 1.

### BRIEF DESCRIPTION OF THE DRAWINGS

FIG. 1A is a cross-sectional view of a known fluid regulator having a elastomeric sealing disk.

FIG. 1B is an enlarged cross-sectional view of a portion of the known fluid regulator of FIG. 1A.

FIG. 2A is a perspective view that depicts an example metal sealing disk with an elastomeric backing material coupled to a disc holder.

FIG. 2B is an exploded view of the example sealing disk apparatus of FIG. 2A.

FIG. 3A illustrates an example fluid regulator system having a regulator similar to that shown in FIG. 1A, but implemented with the example sealing disk apparatus of FIG. 2A.

FIG. 3B is an enlarged cross-sectional view of a portion of the example regulator of FIG. 3A.

### DETAILED DESCRIPTION

In general, the example sealing disk apparatus described herein may be used with fluid control devices (e.g., a fluid regulator) having a disk-shaped flow control member. In particular, the example sealing disk described herein is particularly advantageous when used in severe service conditions such as, for example, in applications involving a fluid having a high velocity and/or a high temperature, a fluid chemically incompatible with an elastomeric material, etc. An elastomeric sealing disk can experience corrosion and damage when used in such severe service conditions. A sealing disk made only of metal, on the other hand, can withstand severe service conditions, but may fail to provide an adequate, reliable seal when engaged with a metal valve seat due to perpendicularity issues (i.e., improper alignment of the sealing disk and the valve seat).

In contrast to the above-mentioned known sealing disks, the example sealing disk apparatus described herein includes a metal or metallic ring portion coupled to an elastomeric ring portion. The metallic ring portion of the example sealing disk described herein provides a sealing surface that is to engage a valve seat (e.g., a metal seat ring) that defines an orifice of a regulator that fluidly couples an inlet of the regulator to an outlet. In severe service conditions, the metallic ring portion provides a rigid, robust and durable surface that is highly resistant to corrosion, chunking, and/or damage caused by particulate matter in the fluid stream, and which also protects the elastomeric backing from erosion and damage. Additionally, the elastomeric backing or elastomeric ring portion provides a substantially resilient surface that enables the metallic ring to shift or move when engaging a metal seat ring to provide a substantial seal. The shifting or movement of the metallic ring allows for self-alignment of the sealing disk apparatus and the metal seat ring, thereby minimizing or substantially eliminating perpendicularity issues that can occur due to misalignment between the metal seat ring and the sealing disk.

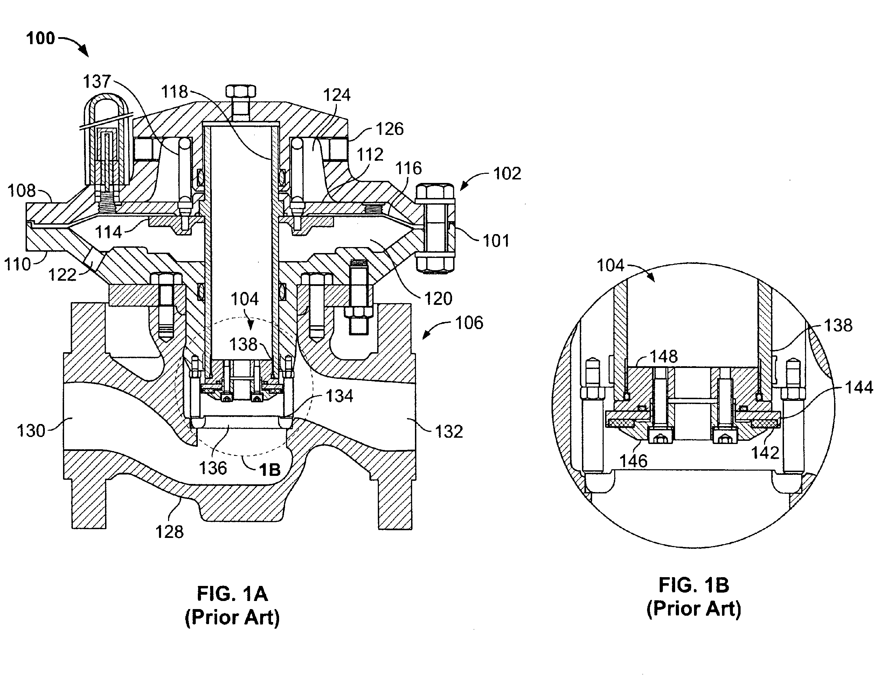

Before describing the example sealing disk apparatus in greater detail, a brief description of a known fluid regulator is provided below in connection with FIGS. 1A and 1B. Typically, a fluid regulator assembly 100 includes a housing or casing 101 that houses an actuator 102 to operate a flow control member or throttling member 104 of a valve 106. In the illustrated example, the actuator 102 includes an upper casing 108 and a lower casing 110 that contain diaphragm plates 112 and 114, which hold a diaphragm 116 in operative engagement with a stem 118. The diaphragm 116 is also captured between the casings 108 and 110 as depicted in FIG. 1 to define a lower fluid chamber 120 that includes an upstream access port 122 and an upper fluid chamber 124 that includes a downstream access port 126. In other example implementations, the actuator 102 can be a piston actuator.

The lower casing 110 is attached to a valve or regulator body 128. The regulator body 128 has an inlet 130 for connection to an upstream pipeline at which relatively high pressure process fluid is presented and an outlet 132 for connection to a downstream pipeline to which the fluid regulator 100 provides the process fluid at a lower regulated pressure. The regulator body 128 is the main pressure boundary of the fluid regulator 100 and supports a seating surface or seat ring 134 that is mounted in the regulator body 128 and which defines an orifice 136 that provides a fluid flow passageway to establish communication between the inlet 130 and the outlet 132.

The stem 118 is movably coupled to the actuator 102 and the flow control member or throttling member 104 is coupled to a lower end 138 of the stem 118 such that the flow control member or throttling member 104 moves away or toward the seat ring 134 to allow or restrict the flow of fluid through the orifice 136 when driven by the actuator 102. In the illustrated example, a spring 137 biases the flow control member 104 to a closed position and provides a reverse loading force that acts on the diaphragm 116. Movements of the flow control member or throttling member 104 are caused by pressure differences across the diaphragm 116, where the pressure differences are proportional to a difference between an actual pressure at the outlet 132 and a desired pressure at the outlet 132.

The upstream access port 122 provides a fluid inlet to fluidly couple via a loading pressure control line (not shown) a load pressure or control pressure (e.g., via a pilot operator) to the lower fluid chamber 120. The downstream access port 126 provides a fluid path to fluidly couple the downstream pressure (i.e., outlet pressure) to the upper chamber 124 via a downstream control line (not shown). The spring 137 and the loading and downstream pressures act on the diaphragm 116 through the upper 124 and the lower 120 fluid chambers to create pressure differences that displace the diaphragm 116 to cause the flow control member 104 to move away or toward the seat ring 134 to allow or restrict the flow of fluid through the regulator 100. Thus, the flow control member 104 will open (i.e., allow fluid to flow through the regulator valve) when the loading pressure overcomes the spring force and downstream pressure applied to diaphragm 116 via the upper chamber 124.

The loading pressure in the example regulator 100 of FIG. 1 can be supplied by a monitoring device that monitors or senses changes in the output or downstream pressure (i.e., a controlled pressure) such as, for example, a pilot regulator or amplifier. However, other example implementations may use other types of regulators such as for example, a self-operated regulator, a pressure loaded regulator, etc.

The flow control member or throttling member 104 is depicted in FIGS. 1A and 1B, and is most clearly shown in FIG. 1A, as a disk-type valve. The flow control member 104 includes a sealing disk 142, a disk mount or holder 144, a disk retainer 146 and a stem adaptor 148. The sealing disk 142 engages the seat ring 134 to restrict the flow of fluid through the regulator 100. The sealing disk 142 is a substantially disk-shaped ring and, as illustrated in FIG. 1B, is made of elastomeric material. However, the disk-shaped ring can be made of metal when the regulator 100 is used in severe service conditions.

As discussed above, sealing disks made only of metal are often limited in use to applications where a reliable seal (e.g., a tight shut-off) is not essential. Such metal sealing disks may fail to provide an adequate, reliable seal when engaged with the seat ring 134 and, thus, may cause an undesired leakage due to perpendicularity issues arising from a misalignment between the metal sealing disk 142 and the metal seat ring 134.

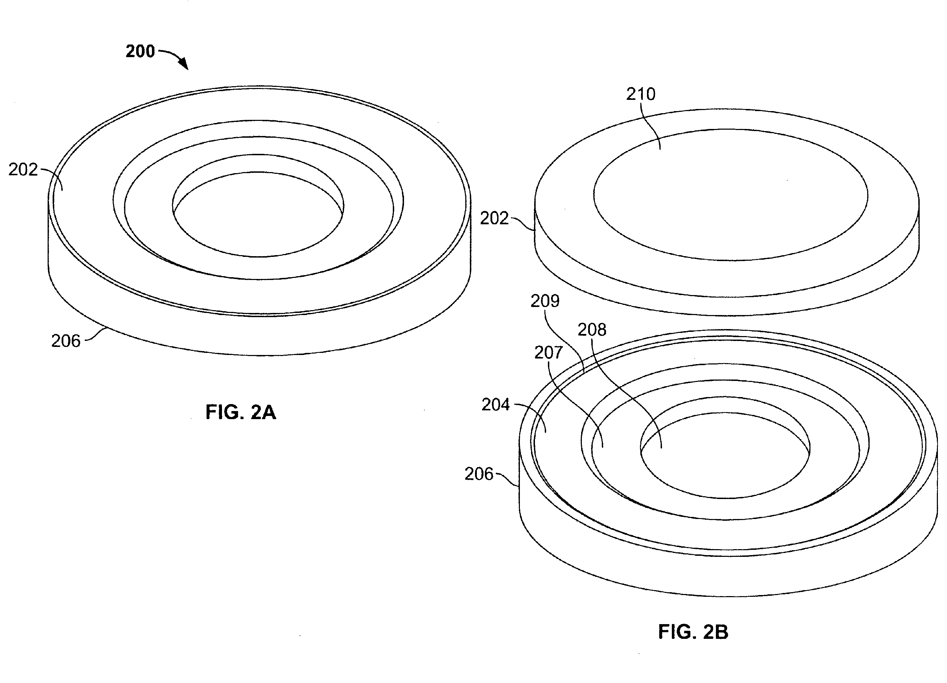

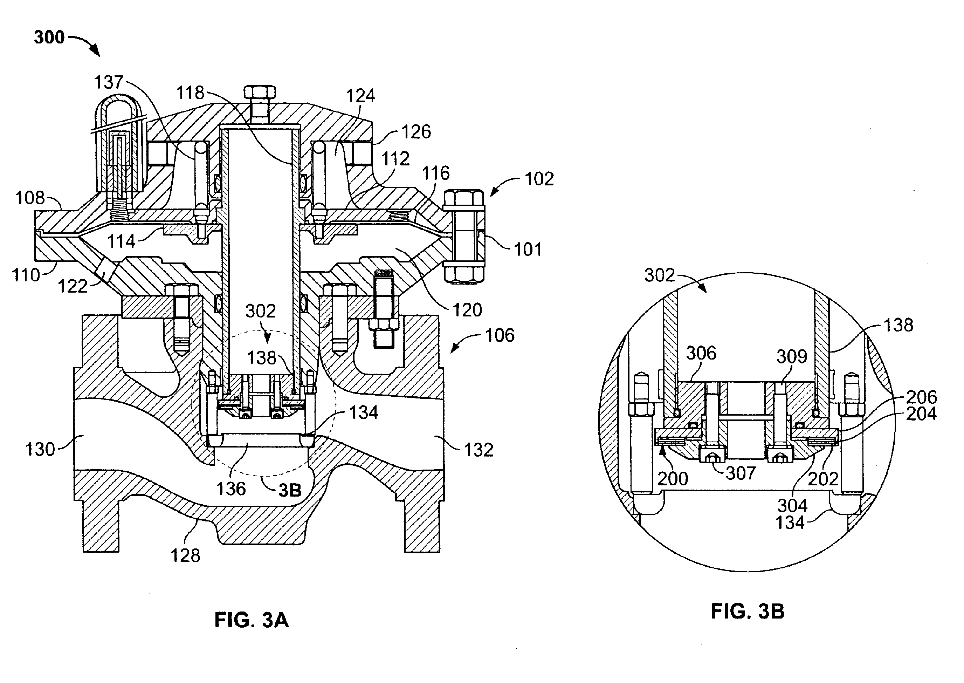

FIG. 2A illustrates an example sealing disk apparatus 200 includes a disk-shaped metallic ring 202 having an elastomeric ring or backing 204. The disk-shaped metallic ring 202 and the elastomeric ring or backing 204 can be coupled to a disk mount or holder 206. The disk mount or holder 206 has a cavity 207 to receive the elastomeric ring or backing 204 and the metallic ring 202. The metallic ring 202 provides a robust and durable surface for use in severe service conditions and the resilient, elastomeric disk-shaped backing 204 enables the metallic ring 202 to shift or move (i.e., self-align) while engaging a seat ring (e.g., the seat ring 134 of FIG. 3B) to minimize perpendicularity issues caused, for example, by a misalignment due to imprecise manufacturing and/or installation of the components. The metallic ring 202 can be made of a metal such as steel and the resilient elastomeric backing 204 can be made of an elastomeric material such as fluoroelastomer (FKM), Neoprene, Nitrile, etc.

As most clearly shown in FIG. 2B, an aperture 208 substantially near the center of the disk mount or holder 206 and an aperture 210 substantially near the center of the metallic ring 202 are sized to receive a disk retainer (e.g., the disk retainer 304 of FIG. 3B). The elastomeric ring or backing 204 can be molded with the disk mount or holder 206. In this manner, a shallow cavity or annular groove 209 to receive the metallic disk 202 can be formed via machining process(es) and/or can be formed when the elastomeric ring or backing 204 is molded with the disk mount or holder 206 (e.g., shallow molding). In other example implementations, the elastomeric backing 204 may be coupled or bonded to the disk mount or holder 206 via chemical fasteners (e.g., adhesives) or any other suitable fastening mechanism(s). In yet other example implementations, the metallic ring 202 may be coupled or bonded to the elastomeric backing 204 via chemical fasteners (e.g., adhesives) and/or any other suitable fastening mechanism(s).

FIG. 3A illustrates an example fluid regulator 300 similar to that shown in FIG. 1, but implemented with the example sealing disk apparatus 200 of FIG. 2A. FIG. 3B illustrates an enlarged view of a portion of the fluid regulator of FIG. 3A. Those components of the regulator 300 that are similar or identical to those used in the example regulator 100 of FIGS. 1A and 1B are labeled with the same reference numbers.

As most clearly shown in FIG. 3A, a disk-type valve assembly 302 includes the example sealing disk apparatus 200, the cup-shaped disk holder 206, a disk retainer 304, and a stem adaptor 306. The disk retainer 304 couples the metallic ring 202, the elastomeric ring 204, and the disk holder 206 to the stem adaptor 306 via cap screws 307 that engage threaded bores 309 in the stem adaptor 306. In other example implementations, the disk retainer 304 may be coupled to the stem adaptor 306 using other mechanical fasteners and/or any other suitable fastening mechanism(s). The stem adaptor 306 couples the disk valve assembly 302 to the lower end 138 of the stem 118.

The example described in connection with the sealing disk apparatus 200 is not limited to the example illustrations of FIGS. 3A and 3B and may be used with various types of fluid regulators (e.g., a gas regulator, a steam regulator, etc.) and valves having a substantially disk-shaped flow control member. In other example implementations, the stem 118 and, thus, the disk valve assembly 302 may be controlled with a spring and/or a piston actuator.

In pilot operation, the loading pressure (i.e., the pressure supplied by a monitoring device such as, for example, a pilot operator or amplifier) acts as an operating medium that applies a load on the diaphragm 116 from the lower chamber 120 through the upstream access port 122 via a loading pressure control line (not shown). A drop in pressure in the outlet or downstream pressure below a desired pressure setting causes the loading pressure (i.e., supplied by the pilot operator) to increase, and the increased load on the diaphragm 116 through the lower chamber 120 causes the diaphragm 116 to displace such that the disk valve assembly 302 moves away from the seat ring 134 to allow fluid to flow from the inlet 130 to the outlet 132 and to a downstream system (not shown).

The outlet or downstream pressure opposes the loading pressure and acts on the diaphragm 116 from the upper fluid chamber 124 through the downstream access port 126 via a downstream control line (not shown). In the illustrated example, the spring 137 biases the flow control member 104 to a closed position and provides a reverse loading force which acts on the diaphragm 116 and assists the outlet pressure in displacing the loading pressure. As the outlet or downstream pressure increases, the outlet or downstream pressure is transmitted to the upper fluid chamber 124 via the downstream access port 126 and acts with the spring 137 to cause the diaphragm 116 to displace such that the disk valve assembly 302 moves toward the seat ring 134 to restrict the flow of fluid through the regulator 300.

As the disk valve assembly 302 moves toward the seat ring 134, the metallic ring portion 202 sealingly engages the seat ring 134 to restrict or substantially prevent the flow of fluid through the regulator 300. Additionally, as the disk valve assembly 302 engages the seat ring 134, the elastomeric backing 204 may cause the metallic ring portion 202 to displace, shift or move to align so that it sealingly engages the seat ring 134 (i.e., the metallic portion 202 aligns itself with the seat ring 134 to minimize perpendicularity issues) to minimize or prevent undesired leakage.

As discussed above, the example sealing disk apparatus 200 advantageously provides a robust and durable metallic surface 202 that protects the elastomeric backing 204 from damage when used in severe service conditions. Additionally, the elastomeric backing 204 is advantageous because its resilient characteristics enables the metallic portion 202 to shift or move such that the metallic portion 202 can align itself to automatically compensate for any misalignment relative to a seat ring when sealingly engaging with the seat ring.

Although certain apparatus and articles of manufacture have been described herein, the scope of coverage of this patent is not limited thereto. To the contrary, this patent covers all apparatus and articles of manufacture fairly falling within the scope of the appended claims either literally or under the doctrine of equivalents.

## Claims

1. A sealing disk apparatus (200) for use with a valve (300), comprising:
a substantially disk-shaped elastomeric ring (204);
an aperture formed substantially near the center of the elastomeric ring (204);
a substantially disk-shaped metallic ring (202) coupled to the elastomeric ring (204) to form a sealing surface;
an aperture (210) formed substantially near the center of the metallic ring (202);
a holder (206) forming a cavity (207), the holder (206) and the cavity sized to receive the elastomeric ring (204) and the metallic ring (202);
a disk retainer (304) arranged for attachment to a valve stem (118) of the valve (300);
the aperture in the elastomeric ring (204) and the aperture (210) in the metallic ring (202) sized to receive the disk retainer (304) to permit securement of the holder (206), the elastomeric ring (204) and the metallic ring (202) to the valve stem (118).

2. The apparatus (200) defined in claim 1, wherein the metallic ring (202) is chemically bonded to the elastomeric ring (204).

3. The apparatus (200) defined in claim 1, in combination with a fluid control member (302) for use with a valve (300).

4. The apparatus (200) defined in claim 3, wherein the disk holder (206) retains the elastomeric ring (204) and the metallic ring (202).

5. The apparatus (200) defined in claim 4, wherein the elastomeric ring (204) is molded with the disk holder (206) to form a shallow cavity or annular groove to receive the metallic ring (202).

6. The apparatus (200) defined in claim 3, wherein the elastomeric ring (204) is chemically bonded to the metallic ring (202).

7. The apparatus (200) defined in claim 3, wherein the metallic ring (202) is to provide a fluid sealing engagement with a valve seat (134) of the valve (300).

8. A fluid regulator (300) employing the sealing apparatus (200) of claim 1.

9. The fluid regulator (300) defined in claim 8, wherein the elastomeric ring (204) is chemically bonded with the metallic ring (202) to couple the metallic ring (202) to the elastomeric ring (204).

10. The fluid regulator (300) defined in claim 8, further comprising a stem adaptor (306) to couple the disk holder (206) to the stem (118) of the actuator (102).

11. The fluid regulator (300) defined in claim 8, wherein the sealing surface is to engage the valve seat (134) to control the flow of fluid between a fluid inlet (130) and a fluid outlet (132) of the fluid regulator (300).

12. The apparatus (200) defined in claim 1, wherein the elastomeric ring (204) and the holder (206) are molded to include an annular groove sized to receive the metallic disk (202).

## Patentansprüche

1. Dichtscheibenvorrichtung (200) zur Verwendung mit einem Ventil (300), Folgendes aufweisend:
einen im Wesentlichen scheibenförmigen Elastomerring (204);
eine Öffnung, die im Wesentlichen nahe der Mitte des Elastomerrings (204) ausgebildet ist;
einen im Wesentlichen scheibenförmigen Metallring (202), der mit dem Elastomerring (204) verbunden ist, um eine Dichtfläche zu bilden;
eine Öffnung, die im Wesentlichen nahe der Mitte des Metallrings (202) ausgebildet ist;
eine Halterung (206), die einen Hohlraum (207) bildet, wobei die Halterung (206) und der Hohlraum dazu bemessen sind, den Elastomerring (204) und den Metallring (202) aufzunehmen;
einen Scheibenhalter (304), der zur Anbringung an einem Ventilschaft (118) des Ventils (300) eingerichtet ist;
wobei die Öffnung im Elastomerring (204) und die Öffnung (210) im Metallring (202) dazu bemessen sind, den Scheibenhalter (304) aufzunehmen, um eine Befestigung der Halterung (206), des Elastomerrings (204) und des Metallrings (202) am Ventilschaft (118) zuzulassen.

2. Vorrichtung (200) nach Anspruch 1, wobei der Metallring (202) chemisch an den Elastomerring (204) gebunden ist.

3. Vorrichtung (200) nach Anspruch 1, in Kombination mit einem Fluidregelungsteil (302) zur Verwendung mit einem Ventil (300).

4. Vorrichtung (200) nach Anspruch 3, wobei die Scheibenhalterung (206) den Elastomerring (204) und den Metallring (202) haltert.

5. Vorrichtung (200) nach Anspruch 4, wobei der Elastomerring (204) mit der Scheibenhalterung (206) geformt ist, um einen flachen Hohlraum oder eine flache Ringnut zur Aufnahme des Metallrings (202) zu bilden.

6. Vorrichtung (200) nach Anspruch 3, wobei der Elastomerring (204) chemisch an den Metallring (202) gebunden ist.

7. Vorrichtung (200) nach Anspruch 3, wobei der Metallring (202) dazu bestimmt ist, einen Fluidabdichtungseingriff mit einem Ventilsitz (134) des Ventils (300) bereitzustellen.

8. Fluidregler (300), der sich der Dichtvorrichtung (200) nach Anspruch 1 bedient.

9. Fluidregler (300) nach Anspruch 8, wobei der Elastomerring (204) chemisch mit dem Metallring (202) zusammengefügt ist, um den Metallring (202) mit dem Elastomerring (204) zu verbinden.

10. Fluidregler (300) nach Anspruch 8, darüber hinaus ein Schaftanpassstück (306) aufweisend, um die Scheibenhalterung (206) mit dem Schaft (118) eines Stellglieds (102) zu verbinden.

11. Fluidregler (300) nach Anspruch 8, wobei die Dichtfläche dazu bestimmt ist, den Ventilsitz (134) in Eingriff zu nehmen, um den Fluidstrom zwischen einem Fluideinlass (130) und einem Fluidauslass (132) des Fluidreglers (300) zu regeln.

12. Vorrichtung (200) nach Anspruch 1, wobei der Elastomerring (204) und die Halterung (206) so geformt sind, dass sie eine Ringnut enthalten, die zur Aufnahme des Metallrings (202) bemessen ist.

## Revendications

1. Dispositif de disque d'étanchéité (200) à utiliser avec une soupape (300), comprenant:
un anneau élastomère (204) sensiblement en forme de disque;
une ouverture formée sensiblement vers le centre de l'anneau élastomère (204);
un anneau métallique sensiblement en forme de disque (202) couplé à l'anneau élastomère (204) pour former une surface d'étanchéité;
une ouverture (210) formée sensiblement vers le centre de l'anneau métallique (202);
un support (206) formant une cavité (207), le support (206) et la cavité étant dimensionnés pour recevoir l'anneau élastomère (204) et l'anneau métallique (202);
un moyen de retenue de disque (304) agencé en vue d'être attaché à une queue de soupape (118) de la soupape (300);
l'ouverture dans l'anneau élastomère (204) et l'ouverture (210) dans l'anneau métallique (202) étant dimensionnées de façon à recevoir le moyen de retenue de disque (304) afin de permettre la fixation du support (206), de l'anneau élastomère (204) et de l'anneau métallique (202) à la queue de soupape (118).

2. Dispositif (200) selon la revendication 1, dans lequel l'anneau métallique (202) est chimiquement lié à l'anneau élastomère (204).

3. Dispositif (200) selon la revendication 1, en combinaison avec un élément de commande de fluide (302) à utiliser avec une soupape (300).

4. Dispositif (200) selon la revendication 3, dans lequel le support de disque (206) retient l'anneau élastomère (204) et l'anneau métallique (202).

5. Dispositif (200) selon la revendication 4, dans lequel l'anneau élastomère (204) est moulé avec le support de disque (206) pour former une cavité creuse ou une gorge annulaire destinée à recevoir l'anneau métallique (202).

6. Dispositif (200) selon la revendication 3, dans lequel l'anneau élastomère (204) est chimiquement lié à l'anneau métallique (202).

7. Dispositif (200) selon la revendication 3, dans lequel l'anneau métallique (202) est destiné à procurer un engagement étanche au fluide avec un siège de soupape (134) de la soupape (300).

8. Régulateur de fluide (300) utilisant le dispositif d'étanchéité (200) selon la revendication 1.

9. Régulateur de fluide (300) selon la revendication 8, dans lequel l'anneau élastomère (204) est chimiquement lié à l'anneau métallique (202) afin de coupler l'anneau métallique (202) à l'anneau élastomère (204).

10. Régulateur de fluide (300) selon la revendication 8, comprenant en outre un adaptateur de tige (306) pour coupler le support de disque (206) à la tige (118) de l'actionneur (102).

11. Régulateur de fluide (300) selon la revendication 8, dans lequel la surface d'étanchéité est destiné à engager le siège de soupape (134) pour commander l'écoulement de fluide entre une entrée de fluide (130) et une sortie de fluide (132) du régulateur de fluide (300).

12. Dispositif (200) selon la revendication 1, dans lequel l'anneau élastomère (204) et le support (206) sont moulés de façon à inclure une gorge annulaire dimensionnée pour recevoir le disque métallique (202).
